# EUROPEAN PATENT APPLICATION

(11) **EP 2 058 151 A1**
(43) Date of publication of application: **13.05.2009**
(21) Application number: 08380175.3
(22) Date of filing: 13.06.2008
(51) Int. Cl.: B60D 1/52

(54) **Detachable tow hitch on vehicle**

(30) Priority: 08.11.2007 ES 200702969
(71) Applicant: Hnos. Sanchez-Lafuente, S.A., 29590 Campanillas (ES)
(72) Inventor: Sanchez-Lafuente Ayala, Francisco, 29590 Campanillas (Malaga) (ES)
(74) Representative: Carpintero Lopez, Francisco

(57) **Abstract**

The invention discloses a tow hitch of the type used on motor vehicles to tow trailers, with four fundamental fitting points that are designed to be manually coupled and detached at will, made from steel and structured as an arm and ball assembly of standard dimensions, solidly joined to the base of a coupling piece by means of a through hole and bolts, said piece integrally consisting of a rectangular part, which defines a male part (7) with a stepped upper base (8,8'), provided with a pin (9) that protrudes from the upper edge, said pin (9) being housed in an elongated symmetrical hole in the male part (7) itself, which is provided with two projections (10) in the middle transversal part of two diametrically opposed sides, and a female coupling piece (13), which is solidly joined in an adequate way to the rear of the towing vehicle.

## Description

### Object of the Invention

The present invention relates to a detachable tow hitch on a vehicle, which provides essential characteristics in terms of novelty and considerable advantages over the means that are known and used for the same purposes in the current state of the art.

More particularly, the present invention proposes the development and construction of a tow hitch of the type used on motor vehicles for coupling and towing trailers, made from steel or another material of equivalent characteristics, which is essentially designed in such a way that it determines two main pieces connected together by a coupling on which three fundamental points or areas of support are defined, ensuring a suitable coupling action and eliminating any possible play and looseness that might occur. The proposed tow hitch design presents the particularity of being manually detachable at will, which makes it easier to clean the part connected to the vehicle, whilst also preventing the operative part of the mechanical system by which it is coupled and detached from being continually exposed to the elements, as it is incorporated into the detachable portion. The invention also includes a means of locking with a key, which guarantees the security of the tow hitch in its coupled situation against possible thefts or similar actions.

The field of application of the invention lies within the industrial sector of the construction of motor vehicle parts in general.

### Background and Summary of the Invention

As is generally known, and more particularly by persons skilled in the art, trailers attached to motor vehicles are towed using coupling devices, which are generally defined by a main element commonly called a "ball" that takes the form of a standard bent rod shape ending in a spherical shape with a larger diameter at its free end or end opposite the coupling end, according to the many designs and configurations that are currently known for this type of elements. Although they normally fulfil the operative function for which they have been created, the current tow hitches are by no means exempt from certain drawbacks, which are partly due to the technique with which they have been developed, specifically in terms of the way in which they are coupled, and also due to the inevitable hardness of the material from which they are made. For example, known tow hitches are designed in such way that once coupled to the vehicle being towed, the connection with the towing vehicle is permanent, so when no trailer is coupled to the tow hitch and it is exposed, the ball protrudes considerably from the rear bumper of the vehicle, which often involves a certain inherent danger to both pedestrians and other vehicles that are parking, for example, as they cannot properly calculate the distance if they are unaware of said element on the vehicle.

Some types of tow hitches that are designed to be detached at will by the user are also known, but the detachable part only includes the ball element, so the rest of the piece remains connected to the motor vehicle, with the consequent exposure to outside agents and to the elements, e.g. dampness, rain, mud, etc., which often causes adverse effects such as rust, impacts, cracks, etc., obviously reducing the useful life of the piece. It is also common in these cases for the coupling elements to present a certain degree of play that ends up increasing over time to the point where they can come to be a safety hazard, which is made worse by the constant movements and jerks between the trailer and towing vehicle.

In order to provide a solution to said drawbacks, the present invention proposes as its main objective to develop a detachable tow hitch system that makes it possible to achieve a quick, easy and safe coupling between the towing vehicle and the trailer. This objective has been successfully achieved by the tow hitch that will be disclosed herein, the main characteristics of which are included in the characterising section of the attached claim 1.

Essentially, the tow hitch proposed by the present invention has been designed as a system that can be detached at will, which is easy for the user to use, and where the detachable portion of the tow hitch comprises both the ball and rod or main element for coupling with the portion installed on the motor vehicle, enabling optimal quick and easy cleaning of the part that is fixed to the vehicle once both parts have been decoupled, thereby preventing the permanent presence of dirt and corrosive or other effects presented by the aforementioned current tow hitches, which obviously shorten the useful life of the piece. Furthermore, the fact that the ball never has to be separated from the coupling element has made it possible to apply a stronger means of fitting, thus avoiding any kind of clearance or play that might cause wear or a lack of safety in said tow hitch, consisting of three fundamental points (one of which is preferably double) or areas of support, so that two of these points, which take the form of a wedge area and a sliding area, have been provided with some slope degrees, as will be explained below in more detail. These specific support or coupling areas make it possible for the two parts of the tow hitch to be connected in a strong, solid manner, extending the useful life of the piece in relation to the solutions provided in the state of the art.

As has been mentioned above, the tow hitch proposed by the present invention also includes a means of locking, which can be operated using a corresponding key, which provides the assembly of the invention with a particular advantage in terms of informing the user about whether or not the parts of the tow hitch are correctly assembled by displaying a certain sign to the user (e.g. one colour for correct assembly and a different colour when it is not correctly assembled), together with the particularity that it offers greater security against theft or accidental and improper handling.

According to the invention, the proposed detachable tow hitch is entirely made from steel or another material with equivalent properties, the ball part generally being a solid piece that is preferably cylindrical and of a certain length, the middle longitudinal part whereof presents a 90° bend as is usual in this type of pieces, the free end whereof, opposite to the coupling end, has an end formation that is generally spherical in shape, the top whereof is cut off to form a flat surface, which is designed to be coupled to the head of the trailer's tow hook, as is known. At the end opposite to said ball, the bent cylindrical rod includes a coupling piece. The latter comprises a body defined by a base that is generally rectangular, with a through hole in one of its smaller sides, into which the aforementioned end of said bent cylindrical rod is inserted and solidly joined.

From said rectangular base of the coupling piece, a piece forming the male part of the coupling extends integrally to the body up to a certain height, preferably presenting a generally prismatic shape with a rectangular cross section, the end whereof consists of two terminals that provide surfaces at different levels in the form of steps, said terminals constituting two of the points or areas of support of the invention, namely, two wedge portions that facilitate the completely vertical coupling of the tow hitch assembly to the portion installed on the vehicle. One of the portions presents a bevelled end that slopes by a certain number of degrees, which provides another fundamental fitting area when the ball and male part assembly is coupled to the female part that is solidly joined and fixed to the vehicle being towed.

The third coupling point, which is double in the case of the preferred embodiment that is disclosed and illustrated, consists of a pair of projections that are integral to said male part and which project orthogonally from two opposite faces of said male part from positions that are coplanar and opposite each other on a middle transversal plane of said male piece. In the case of the drawings shown, both projections have been shown with a cylindrical shape, but as a person skilled in the art will understand, the number of projections may vary, e.g. between one and three, as may their shape, e.g. their cross section may be cylindrical, oval, triangular, etc., or they may even consist of successive portions of different diameters, thus providing stepped elements.

As regards the female part of the tow hitch, which is solidly joined to the towing vehicle, it consists of two pieces or halves that are symmetrical in relation to the central plane of connection, and which can be connected to each other by joining two main areas that determine two through holes for the insertion of bolts or suchlike, which in turn serve to permanently secure it to the towing vehicle, this female part of the tow hitch being hidden at the rear of the motor vehicle, in a vertical position, so that the base of the cavity wherein the male part is inserted and housed is open on the underside of the piece, which in turn is a great advantage when it comes to cleaning it, as a jet of water can be directed upwards without it being possible for water to accumulate therein, thus avoiding the formation of rust that could lead to undesired corrosion.

On one of the sides of the coupling piece consisting of the male part and said rectangular body there is a lock that can be actuated using a corresponding key, which not only provides security against theft, but also enables the pin of the tow hitch to move in both directions (as required) in the longitudinal direction of the male part. This movement of the pin means that an optimum fit is achieved in the coupling of the tow hitch because, should there be any wear in the coupling pieces over time, said pin can be moved further, always providing an optimum fit. This ensures a more secure coupling and a longer useful life of the device in optimum conditions of use because, as there is no undesired clearance and play, any friction and therefore any stress or wear of the different parts that make up the tow hitch are practically eliminated.

In order to provide greater security in the assembly of the tow hitch proposed by the invention, it has an indicator means that can be situated in a suitable position of the lock (not shown in the drawings), informing the user whether the assembly of the two parts of the tow hitch is correct or incorrect, for which the indicator shows a warning signal on a display. Said warning signal can consist of coloured indicators or any other conventional means. In a preferred embodiment, the indicator can be green when the assembly is correct or red when it has not been correctly assembled.

As an additional advantage, it must be mentioned that thanks to the design of the tow hitch system of the invention, its dimensions and weight are such that it is easy for any user to handle, in both the coupling and the detachment operation, and also in terms of the necessary space for its storage, whether in the boot of the vehicle itself or anywhere in the user's house, garage or workshop.

### Brief Description of the Drawings

These and other characteristics and advantages of the invention will be shown more clearly in the following detailed description of a preferred embodiment, which is intended only as an illustrative, non-limiting example, with reference to the attached drawings, wherein:
- Figure 1: shows a general schematic perspective view of the detachable piece of the tow hitch proposed by the invention;

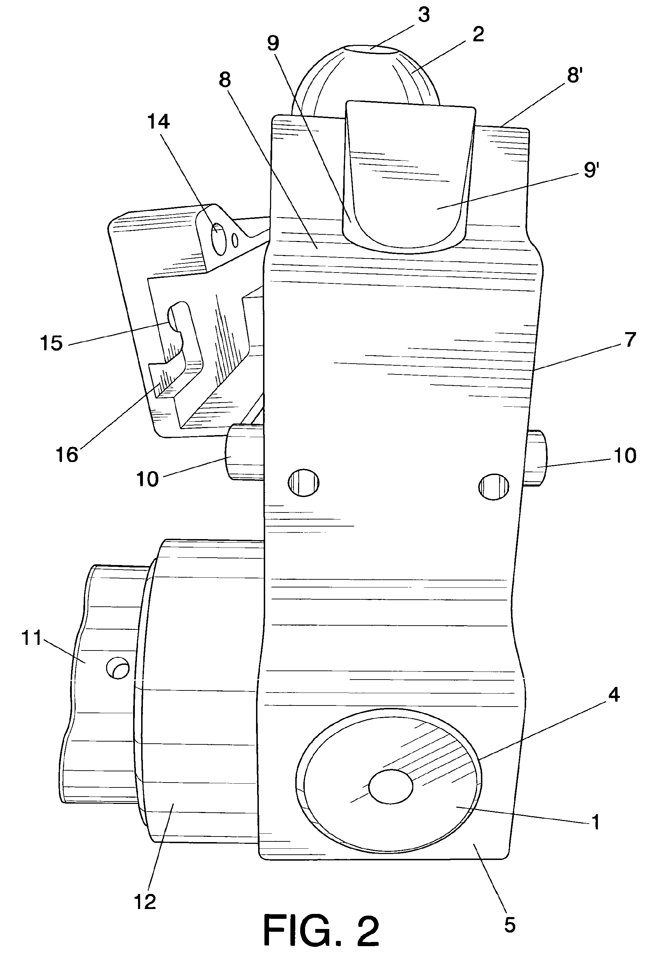

- Figure 2: shows a rear elevation view of the same detachable piece shown in figure 1, and
- Figure 3: shows a slightly perspective schematic view of one of the two parts or halves that make up the female piece that is fixed to the towing vehicle.

### Description of a Preferred Embodiment

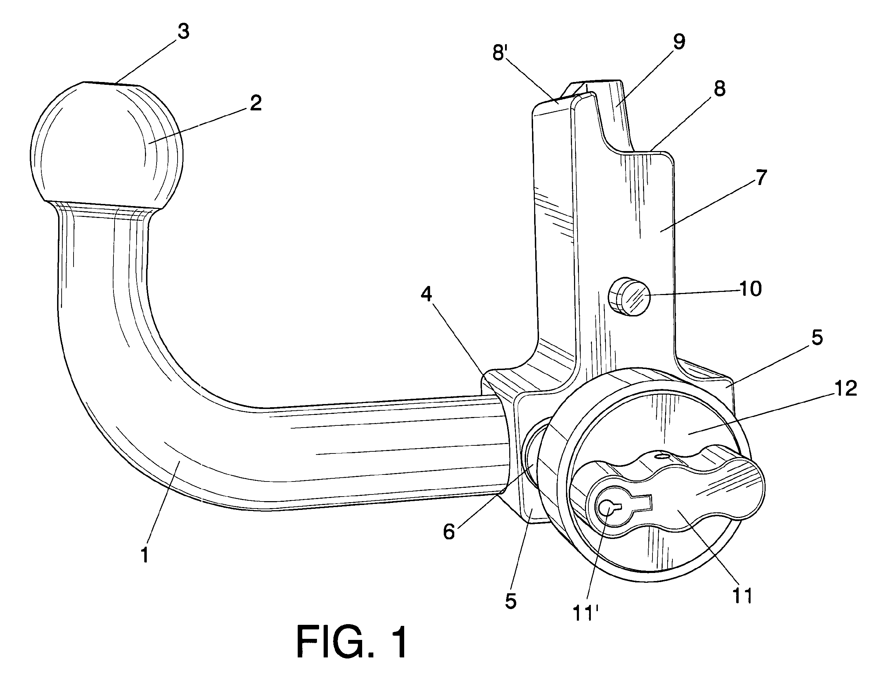

As has been mentioned above, the detailed description of a preferred embodiment of the object of the present invention will be carried out below with the aid of the attached drawings, in which the same numerical references are used to designate the same or similar parts. Thus, with reference to figure 1 first, a schematic perspective view of the detachable part of the tow hitch proposed by the invention can be seen, shown in a similar position to that adopted when it is operational. As can be seen, the ball assembly consists of a cylindrical arm 1 that is bent in an intermediate position to an angle of 90°, the terminal end whereof adopts a spherical shape in the form of a ball 2 of a considerably greater diameter than the diameter of said cylindrical arm. The top of the ball 2 is removed on a transversal cutting plane that determines the formation of a substantially flat surface 3 in relation to the end that is coupled to the trailer.

The opposite end to this ball assembly corresponding to the horizontal section of said cylindrical arm 1 is inserted into and solidly joined to a through hole 4 of a similar diameter, which is made in the base 5 of a body that forms the coupling piece with the part of the tow hitch that is solidly joined to the trailer; the fastening between the cylindrical rod 1 and the body 5 is achieved thanks to the provision of a certain number of lateral threaded holes that house bolts 6 that ensure a solid fit of the ball.

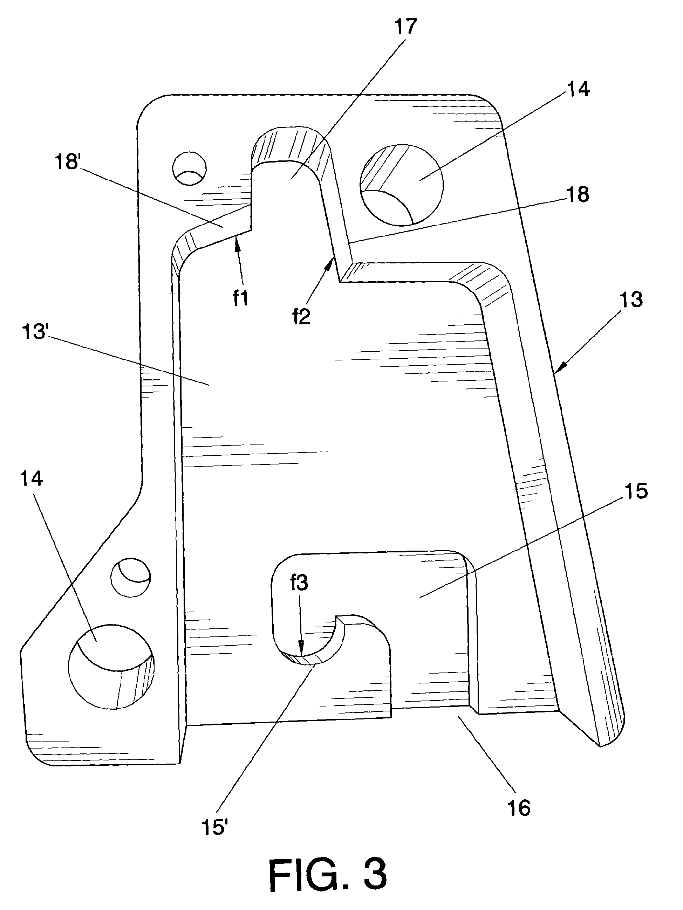

Said base 5 of the coupling piece defines a generally rectangular-shaped body, wherefrom a vertical male coupling portion 7 of the tow hitch emerges vertically and integrally to said body, to be inserted into the fixed part of the tow hitch that is connected to the towing vehicle. This male part 7 presents a generally rectangular prismatic shape, extending in a vertical position and with the upper base divided into two surface planes 8, 8' at different height levels in relation to the position of the male part 7, level 8' being longer, with the edge of the upper surface sloping by a certain number of degrees in order to maintain a continuous fit throughout the useful life of the tow hitch, this determining one of the three fundamental points or areas of support mentioned above. This terminal formation 8' is designed to be coupled to a portion 18' with an equivalent configuration in the female piece 13, as will be seen in greater detail below with reference to figure 3, and as is shown by an arrow f1 indicating the direction in which force is applied in the coupling. The male part 7 also has the formation of a second terminal 9 that is also vertical, in the form of a vertical slide of predetermined dimensions, the end portion whereof protrudes in relation to the upper base of the male part itself, which also presents a bevelled surface 9' that determines a slope of a few degrees in relation to the vertical, providing another of the continual points or areas of support when both parts of the tow hitch have been coupled and the assembly is operational, by virtue of the support with a corresponding area 18 provided in the female piece, where force is applied as shown by the arrow f2 in the drawing of figure 3.

Additionally, the male part has a third element of support that, in the case of the embodiment being described, takes the form of two projections 10 positioned at an intermediate height on said male part, which project orthogonally from diametrically opposed positions, which provide the invention with two fundamental points of support, and which are designed to be inserted into cavities provided for this purpose in said female piece of the tow hitch, as will be seen below with reference to figure 3.

As has been mentioned above, the detachable part of the tow hitch includes a lock 12, positioned laterally on the base 5 of the body, which is designed so as to define two main portions 11, 11' of different shapes, of which a first portion 11 extends according to a diagonal of the lock 12, with a generally elongated shape, delimited by a wavy longitudinal lateral surface, and the second portion 11' consists of the lock cylinder, in an off-centre position towards one of the ends of this same elongated portion 11. The lock 12 as a whole has a generally cylindrical shape, which makes it easy for the user to operate, both when assembling and detaching the device.

As has been said, figure 3 shows the female piece of the tow hitch proposed by the invention. This piece, which is generally indicated by numerical reference 13, has been specially designed so that the different coupling and detachment operations can be carried out quickly and simply, and it comprises two parts or halves that are the same and symmetrical in relation to the central plane of connection; therefore, only one of them is shown, but this description is entirely applicable to the opposite half too.

For the purposes of fastening both parts or halves of the female piece of the tow hitch, each of them has two or more through holes 14 in which to house bolts or other similar fastening elements, which in turn constitute an effective means of solidly joining them to the towing vehicle. A cavity 13' has been created that affects practically the entire surface of said female piece 13, for housing the male part 7 when it is coupled, for which the female piece 13 is provided with characteristics and dimensions that correspond to those of said male part, thus helping the user to carry out both the coupling and releasing operations. The cavity 13' in the female piece 13 has a notch 15 with a bent course, through which a respective projection 10 on the male part 7 moves, until this projection reaches the end of its course and becomes lodged in a recessed formation 15' with an approximately semicircular profile that extends downwards according to the operational position of the female piece. With the projection lodged in said semicircular housing, this constitutes the last of the three fundamental points or areas proposed by the invention, when the direction of the force applied against the semicircular side of the housing is as indicated by the arrow f3.

Furthermore, at the opposite end of the female piece 13 of the tow hitch there is a recess 17 that defines two areas 18, 18', the design and dimensions of which are complementary to the surfaces 8', 9' of the terminal portions of the male part 7 of the detachable piece, to ensure a perfect mutual coupling in the operational situation of the tow hitch. In the case of the female piece 13, both surfaces 18, 18' are separated by the distance provided by said recess 17, which has suitable dimensions to house the terminal or pin 9, with its bevelled surface 9' optimising the coupling by resting on one side 18' of the hollow or recess 17 once the lock 12 is actuated, prolonging the release thereof.

As will be understood, the tow hitch system for a vehicle to tow a trailer that has been described herein involves an absolutely vertical coupling operation, with the particularity that in the absence of the detachable part, the part incorporated into the towing vehicle is completely hidden, with the advantages mentioned above. Additionally, the fact that the ball assembly consisting of the detachable part can be manually detached from the tow hitch by the user means that this assembly is not left outside, thus safeguarding it from the elements and thereby prolonging its useful life.

No further explanation of the content of this description is considered necessary for a person skilled in the art to be able to understand its scope and the advantages deriving from the invention, and to develop and put into practice the object thereof.

However, it must be understood that the invention has been described according to a preferred embodiment thereof, which means that modifications may be made, in particular, to the general shape, the dimensions of the pieces, and/or the materials used to manufacture all its parts, providing that they comply with the requirements imposed by the application for which they are intended.

## Claims

1. Detachable tow hitch on vehicles, of the type used on motor vehicles for coupling and towing trailers, essentially consisting of two parts or pieces of which a male part is detachable and a female part is incorporated into the towing vehicle, the detachable part of the tow hitch including an indicator display that informs the user whether or not the coupling between the detachable and fixed parts has been correctly performed, and wherein the detachable part includes a cylindrical arm (1) that is bent at 90° and ends in a spherical universal ball (2) with a greater diameter than the arm (1), wherefrom a portion of the top is removed to form a flat surface (3), **characterised in that** said arm and universal ball assembly is solidly joined to a base body (5) of a coupling piece wherein the end of said arm (1) is inserted into a through hole (4) in said body (5) with the aid of bolts (6) housed in corresponding holes of said base body (5), an element (7) emerging from this base body (5) and integral thereto, which is integral to the body (5) that defines a male portion of an overall rectangular prismatic shape, vertically positioned when the tow hitch is coupled, the upper base whereof ends in a stepped formation that provides two surface levels (8, 8') at different heights, and by a protruding pin element (9), as a vertical slide, which presents a bevelled surface (9'),
and **in that** the fixed piece or part of the tow hitch consists of two halves (13) that are the same as each other and symmetrical in relation to the central plane of connection, each of said parts or halves (13) presenting at least one pair of holes (14) in mutually corresponding positions through which to pass bolts for connecting both parts (13) of the fixed piece together and for connecting the latter to the towing vehicle, so that each of the pieces (13) presents an inner cavity that affects almost its entire dimension, which is open at the end by which it is coupled to the male piece, each female piece (13) having a notch (16) that begins at the open edge of the piece and follows a bent course that ends at the widened semicircular lower inner end (15), whilst at the opposite end of the piece (13) there is a recess (17) that defines portions or areas of support (18, 18') on each side of said recess.

2. Tow hitch according to claim 1, **characterised in that** said male part (7) of the detachable piece of the tow hitch presents at least one support projection (10), though preferably two support projections (10) that project orthogonally from opposite sides of the male part at an intermediate height.

3. Tow hitch according to claim 2, **characterised in that** each projection (10) can have a cylindrical shape, or can present a cross section that is triangular, oval or of a different geometrical shape.

4. Tow hitch according to claims 2 and 3, **characterised in that** each projection (10) can consist of a body that is stepped thanks to the provision of sections with a successively decreasing diameter.

5. Tow hitch according to claims 1 to 4, **characterised in that** when the tow hitch is coupled, there are three fundamental points or areas of support, of which two points of support are provided by the surfaces (8', 9') of the end terminals (8, 9) of the male part (7) of the detachable piece and by the portions (18', 18), respectively, on both sides of the recess (17) of the female piece (13), and of which the third fundamental point of support of the coupling is determined by the insertion of each projection (10) into the corresponding notch (16), until it is finally lodged in the semicircular end (15') of said notch.

6. Tow hitch according to claims 1 to 5, **characterised in that** the surfaces (8', 9') of both terminal elements (8, 9) slope by a certain number of degrees.

7. Tow hitch according to claims 1 to 6, **characterised in that** the coupling of the detachable piece with the fixed piece is carried out entirely in a vertical direction.

8. Tow hitch according to claims 1 to 7, **characterised in that** the female piece (7) connected to the towing vehicle remains completely hidden when the tow hitch is detached, whilst the separation of the detachable piece ensures that this coupling assembly can be stored in a place where it is protected from the elements.
